# EUROPEAN PATENT APPLICATION

(11) **EP 4 398 619 A1**
(43) Date of publication of application: **10.07.2024**
(21) Application number: 22874895.0
(22) Date of filing: 27.09.2022
(51) Int. Cl.: H04W 12/12

(54) **COMMUNICATION METHOD AND APPARATUS**

(30) Priority: 28.09.2021 CN 202111140152
(71) Applicant: Huawei Technologies Co., Ltd., Shenzhen, Guangdong 518129 (CN)
(72) Inventor: XIANG, Hongyu, Shenzhen, Guangdong 518129 (CN); CHEN, Lei, Shenzhen, Guangdong 518129 (CN); XU, Bin, Shenzhen, Guangdong 518129 (CN); LI, Bingzhao, Shenzhen, Guangdong 518129 (CN)
(74) Representative: Thun, Clemens
(86) International application number: PCT/CN2022/121643
(87) International publication number: WO 2023/051510

(57) **Abstract**

This application provides a communication method and apparatus, to improve communication security. The method includes: receiving first system information from a network device, where the first system information includes a first signature; determining a first digest based on the first signature; determining a second digest based on the first system information; and if the first digest matches the second digest, storing or applying the first system information. In embodiments of this application, a signature is carried in a field of system information, so that both a terminal device that supports the signature and a terminal device that does not support the signature can complete decoding of the system information. Specifically, the terminal device that supports the signature may perform verification by using a signature obtained through decoding, thereby enhancing communication security. The terminal device that does not support the signature may skip the field that carries the signature, so that storage and use of other content of the system information by the terminal device are not affected. Therefore, backward compatibility may be ensured by using the method provided in embodiments of this application.

## Description

### CROSS-REFERENCE TO RELATED APPLICATIONS

This application claims priority to Chinese Patent Application No. 202111140152.8, filed with the China National Intellectual Property Administration on September 28, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In wireless communication, communication security is a quite important factor, and relates to security assurance of user data. A fake base station attack is a common means that threatens wireless security. A network attacker places a fake base station in coverage of a target base station, and the fake base station may force a nearby target terminal device of the fake base station to perform cell reselection, location update, and handover, to deceive the terminal device and provide incorrect information for the terminal device, to spread a virus, perform network fraud, and the like. For example, when accessing the fake base station, the terminal device may use an incorrect system message provided by the fake base station. As a result, the terminal device cannot be paged by a network, and cannot access the network to work normally. For another example, the system message may be intercepted and illegally tampered with by the fake base station. Consequently, the terminal device cannot normally communicate with a base station by using an incorrect paging parameter or the like, and finally a handover failure, an abnormal call drop, or the like is caused.

How to improve communication security is an urgent problem to be resolved.

### SUMMARY

This application provides a communication method and apparatus, to improve communication security.

According to a first aspect, this application provides a communication method. The method may be performed by a terminal device, or may be performed by a chip or a circuit. The method includes: receiving first system information from a network device, where the first system information includes a first signature; determining a first digest based on the first signature; determining a second digest based on the first system information; and if the first digest matches the second digest, storing or applying the first system information.

In this embodiment of this application, the terminal device may obtain a signature from system information, so that the terminal device may verify the system information based on the signature carried in the system information. In this manner, communication security may be enhanced.

In addition, if the network device separately sends the system information and the signature by using two information elements in one message, a terminal device can decode the message only when the terminal device supports the signature. A terminal device that does not support the signature cannot complete decoding of the message, and consequently cannot obtain the system information. In comparison with this manner, in this embodiment of this application, the signature is carried in a field of the system information, so that both the terminal device that supports the signature and the terminal device that does not support the signature can complete decoding of the system information. Specifically, the terminal device that supports the signature may perform verification by using a signature obtained through decoding, and the terminal device that does not support the signature may skip the field that carries the signature, so that storage and use of other content of the system information by the terminal device are not affected. Therefore, backward compatibility may be ensured by using the method provided in this embodiment of this application.

In a possible design, when the second digest is determined based on the first system information, a field corresponding to the first signature in the first system information may be set to preset content, to obtain first information; and the second digest is determined based on the first information. In the foregoing design, the first signature is replaced with the preset content, so that the determined second digest is not affected by the first signature, and verification accuracy may be improved.

In a possible design, the preset content is that all bits included in the field are 0; or the preset content is that all bits included in the field are 1.

In a possible design, when the second digest is determined based on the first system information, the first system information includes second information and the first signature, and the second digest may be determined based on the second information. In the foregoing design, the second digest is determined based on a non-signature part in the first system information, so that the determined second digest is not affected by the first signature, and verification accuracy may be improved.

In a possible design, the first signature is carried in an extension field in the first system information. In the foregoing design, the signature is carried in the extension field of the system information. In this way, the terminal device that supports the signature may perform verification by using the signature obtained through decoding, and the terminal device that does not support the signature may skip the field that carries the signature, so that storage and use of other content of the system information by the terminal device are not affected.

In a possible design, the first system information may further include a second field and a third field, the second field is used to carry specific content of the system information, and the third field may be used to carry extension information emerging in future communication development. Forward compatibility may be ensured by using the third field.

According to a second aspect, this application provides a communication method. The method may be performed by a network device, or may be performed by a chip or a circuit. The method includes: generating first system information and sending the first system information to a terminal device, where the first system information includes a first signature.

In this embodiment of this application, the terminal device may obtain a signature from system information, so that the terminal device may verify the system information based on the signature carried in the system information. In this manner, communication security may be enhanced.

In addition, if the network device separately sends the system information and the signature by using two information elements in one message, a terminal device can decode the message only when the terminal device supports the signature. A terminal device that does not support the signature cannot complete decoding of the message, and consequently cannot obtain the system information. In comparison with this manner, in this embodiment of this application, the signature is carried in a field of the system information, so that both the terminal device that supports the signature and the terminal device that does not support the signature can complete decoding of the system information. Specifically, the terminal device that supports the signature may perform verification by using a signature obtained through decoding, and the terminal device that does not support the signature may skip the field that carries the signature, so that storage and use of other content of the system information by the terminal device are not affected. Therefore, backward compatibility may be ensured by using the method provided in this embodiment of this application.

In a possible design, when the first system information is generated, the first signature may be generated based on first information, a first field in the first information is preset content, and the first field in the first information is set to the first signature, to obtain the first system information. In the foregoing design, the network device and the terminal device set the field that carries the first signature to the preset content, so that the terminal device is not affected by the first signature when determining a second digest, and verification accuracy may be improved.

In a possible design, the preset content is that all bits included in the first field are 0; or the preset content is that all bits included in the first field are 1.

In a possible design, when the first system information is generated, the first signature is generated based on second information, and the first system information includes the second information and the first signature. According to the foregoing design, both the network device and the terminal device may avoid the field that carries the signature when generating the signature, so that the terminal device is not affected by the first signature when determining the second digest, and verification accuracy may be improved.

In a possible design, the first signature is carried in an extension field in the first system information. In the foregoing design, the signature is carried in the extension field of the system information. In this way, the terminal device that supports the signature may perform verification by using the signature obtained through decoding, and the terminal device that does not support the signature may skip the field that carries the signature, so that storage and use of other content of the system information by the terminal device are not affected.

In a possible design, the first system information may further include a second field and a third field, the second field is used to carry specific content of the system information, and the third field may be used to carry extension information emerging in future communication development. Forward compatibility may be ensured by using the third field.

According to a third aspect, this application provides a communication method. The method may be performed by a terminal device, or may be performed by a chip or a circuit. The method includes: receiving first system information from a network device, and receiving a first signature from the network device based on the first system information; determining a first digest based on the first signature, and determining a second digest based on the first system information; and if the first digest matches the second digest, storing or applying the first system information.

In this embodiment of this application, system information and a corresponding signature are separately sent, so that the terminal device that supports the signature may receive the signature based on a correspondence between a time-frequency resource corresponding to the signature and a time-frequency resource corresponding to the system information (or a time-frequency resource indicated by the system information), and perform verification based on the signature. In this manner, communication security may be enhanced. In addition, the terminal device that does not support the signature may not receive the signature, so that storage and use of the system information by the terminal device are not affected.

In a possible design, when the first signature from the network device is received based on the first system information, the first signature may be received based on a time-frequency resource corresponding to the first system information. In the foregoing design, the first signature corresponding to the first system information may be determined by using a correspondence between the time-frequency resource corresponding to the first system information and the first signature, so that the first system information may be verified, thereby improving network security.

In a possible design, there is a correspondence between the time-frequency resource corresponding to the first system information and a time-frequency resource corresponding to the first signature.

In a possible design, a time domain resource corresponding to the first system information and a time domain resource corresponding to the first signature are separated by a first offset; and/or a frequency domain resource corresponding to the first system information and a frequency domain resource corresponding to the first signature are separated by a second offset. According to the foregoing design, the first signature corresponding to the first system information may be accurately determined, thereby improving network security.

In a possible design, the first system information indicates the time-frequency resource used to carry the first signature; and when the first signature from the network device is received based on the first system information, the first signature is received on the time-frequency resource indicated by the first system information. According to the foregoing design, the first signature corresponding to the first system information may be accurately determined, thereby improving network security.

In a possible design, a sending periodicity of the first system information is the same as a sending periodicity of the first signature. According to the foregoing design, accuracy of receiving the first signature may be further improved, thereby further improving network security.

In a possible design, a radio network temporary identifier corresponding to the first signature is different from a radio network temporary identifier corresponding to the first system information. In the foregoing design, different radio network temporary identifiers are used, so that the terminal device may distinguish between the signature and the system information, and an information conflict may be avoided, thereby improving accuracy of the system information.

In a possible design, the first system information may include a second field and a third field, the second field is used to carry specific content of the system information, and the third field may be used to carry extension information emerging in future communication development. Forward compatibility may be ensured by using the third field.

According to a fourth aspect, this application provides a communication method. The method may be performed by a network device, or may be performed by a chip or a circuit. The method includes: sending first system information to a terminal device, and sending a first signature to the terminal device based on the first system information.

In this embodiment of this application, system information and a corresponding signature are separately sent, so that the terminal device that supports the signature may receive the signature based on a correspondence between a time-frequency resource corresponding to the signature and a time-frequency resource corresponding to the system information (or a time-frequency resource indicated by the system information), and perform verification based on the signature. In this manner, communication security may be enhanced. In addition, the terminal device that does not support the signature may not receive the signature, so that storage and use of the system information by the terminal device are not affected.

In a possible design, when the first signature is sent to the terminal device based on the first system information, the first signature may be sent to the terminal device based on a time-frequency resource corresponding to the first system information. In the foregoing design, the first signature corresponding to the first system information may be determined by using a correspondence between the time-frequency resource corresponding to the first system information and the first signature, so that the first system information may be verified, thereby improving network security.

In a possible design, there is a correspondence between a time-frequency resource corresponding to the first signature and the time-frequency resource corresponding to the first system information.

In a possible design, a time domain resource corresponding to the first system information and a time domain resource corresponding to the first signature are separated by a first offset; and/or a frequency domain resource corresponding to the first system information and a frequency domain resource corresponding to the first signature are separated by a second offset. According to the foregoing design, the first signature corresponding to the first system information may be accurately determined, thereby improving network security.

In a possible design, the first system information indicates the time-frequency resource used to carry the first signature; and when the first signature is sent to the terminal device based on the first system information, the first signature is sent to the terminal device on the time-frequency resource indicated by the first system information. According to the foregoing design, the first signature corresponding to the first system information may be accurately determined, thereby improving network security.

In a possible design, a sending periodicity of the first system information is the same as a sending periodicity of the first signature. According to the foregoing design, accuracy of receiving the first signature may be further improved, thereby further improving network security.

In a possible design, a radio network temporary identifier corresponding to the first signature is different from a radio network temporary identifier corresponding to the first system information. In the foregoing design, different RNTIs are used, so that the terminal device may distinguish between the signature and the system information, and an information conflict may be avoided, thereby improving accuracy of the system information.

In a possible design, the first system information may include a second field and a third field, the second field is used to carry specific content of the system information, and the third field may be used to carry extension information emerging in future communication development. Forward compatibility may be ensured by using the third field.

According to a fifth aspect, this application provides a communication method. The method may be performed by a terminal device, or may be performed by a chip or a circuit. The method includes: receiving first system information from a network device; receiving signature information from the network device, where the signature information includes N signatures and indication information, the indication information indicates system information respectively corresponding to the N signatures, and N is an integer greater than 0; determining, based on the signature information, a first signature corresponding to the first system information, where the first signature belongs to the N signatures; determining a first digest based on the first signature, and determining a second digest based on the first system information; and if the first digest matches the second digest, storing or applying the first system information.

In this embodiment of this application, the terminal device may obtain, based on the signature information, the signature corresponding to the system information, so that verification may be performed on the system information based on the signature. In this manner, communication security may be enhanced.

In addition, in this embodiment of this application, the system information is decoupled from the signature, so that a terminal device that does not support the signature may not receive the signature information, and a terminal device that supports the signature may determine, based on the signature information, the signature corresponding to the system information for verification, so that forward compatibility may be ensured. In addition, a plurality of signatures are sent in one message, so that same signatures are sent only once, thereby reducing signaling overheads.

In a possible design, a second signature in the N signatures corresponds to a plurality of pieces of system information. In the foregoing design, a plurality of signatures are sent in one message, so that same signatures are sent only once, thereby reducing signaling overheads.

In a possible design, the indication information indicates a low-order bit of a time counter of the system information corresponding to the N signatures. According to the foregoing design, the indication information may indicate a correspondence between the signature and receiving time of the system information by using a small quantity of bits.

In a possible design, the low-order bit corresponding to the signature information includes low-order bits of the time counter of all sending time of the system information corresponding to the signature. In the foregoing design, the low-order bits of all sending time are indicated, so that the terminal device may determine the corresponding signature based on the receiving time of the system information, and implementation complexity may be ensured.

In a possible design, the low-order bit corresponding to the signature information includes a low-order bit of the time counter of initial sending time of the system information corresponding to the signature. In the foregoing design, the low-order bit of the initial sending time is indicated, so that signaling overheads may be further reduced.

In a possible design, the indication information indicates a time unit in which sending time of the system information corresponding to the N signatures is located. According to the foregoing design, the indication information may indicate a correspondence between the signature and receiving time of the system information by using a small quantity of bits.

In a possible design, the indication information indicates first time in a sending periodicity of the signature information, and indicates signatures respectively corresponding to time before the first time and time after the first time. According to the foregoing design, the indication information may indicate a correspondence between the signature and receiving time of the system information by using a small quantity of bits.

In a possible design, if the system information is a system information block (system information block, SIB) 9, the sending periodicity of the system information is the same as a sending periodicity of the signature information, or the system information and the signature information are carried in a same message. According to the foregoing design, accuracy of time adjustment may be improved.

In a possible design, the signature information may be sent for a plurality of times. In this manner, it may be ensured that the terminal device may receive the signature information, so that network security may be ensured.

In a possible design, the signature included in the signature information may be a subset of all signatures. In this manner, signaling overheads may be further reduced.

According to a sixth aspect, this application provides a communication method. The method may be performed by a network device, or may be performed by a chip or a circuit. The method includes: sending first system information to a terminal device, and sending signature information to the terminal device, where the signature information includes N signatures and indication information, the indication information indicates system information respectively corresponding to the N signatures, and N is an integer greater than 0.

In this embodiment of this application, the terminal device may obtain, based on the signature information, the signature corresponding to the system information, so that verification may be performed on the system information based on the signature. In this manner, communication security may be enhanced.

In addition, in this embodiment of this application, the system information is decoupled from the signature, so that a terminal device that does not support the signature may not receive the signature information, and a terminal device that supports the signature may determine, based on the signature information, the signature corresponding to the system information for verification, so that forward compatibility may be ensured. In addition, a plurality of signatures are sent in one message, so that same signatures are sent only once, thereby reducing signaling overheads.

In a possible design, a second signature in the N signatures corresponds to a plurality of pieces of system information. In the foregoing design, a plurality of signatures are sent in one message, so that same signatures are sent only once, thereby reducing signaling overheads.

In a possible design, the indication information indicates a low-order bit of a time counter of the system information corresponding to the N signatures. According to the foregoing design, the indication information may indicate a correspondence between the signature and receiving time of the system information by using a small quantity of bits.

In a possible design, the low-order bit corresponding to the signature information includes low-order bits of the time counter of all sending time of the system information corresponding to the signature. In the foregoing design, the low-order bits of all sending time are indicated, so that the terminal device may determine the corresponding signature based on the receiving time of the system information, and implementation complexity may be ensured.

In a possible design, the low-order bit corresponding to the signature information includes a low-order bit of the time counter of initial sending time of the system information corresponding to the signature. In the foregoing design, the low-order bit of the initial sending time is indicated, so that signaling overheads may be further reduced.

In a possible design, the indication information indicates a time unit in which sending time of the system information corresponding to the N signatures is located. According to the foregoing design, the indication information may indicate a correspondence between the signature and receiving time of the system information by using a small quantity of bits.

In a possible design, the indication information indicates first time in a sending periodicity of the signature information, and indicates signatures respectively corresponding to time before the first time and time after the first time. According to the foregoing design, the indication information may indicate a correspondence between the signature and receiving time of the system information by using a small quantity of bits.

In a possible design, if the system information is a SIB9, the sending periodicity of the system information is the same as the sending periodicity of the signature information, or the system information and the signature information are carried in a same message. According to the foregoing design, accuracy of time adjustment may be improved.

In a possible design, the signature information may be sent for a plurality of times. In this manner, it may be ensured that the terminal device may receive the signature information, so that network security may be ensured.

In a possible design, the signature included in the signature information may be a subset of all signatures. In this manner, signaling overheads may be further reduced.

According to a seventh aspect, this application further provides a communication apparatus. The communication apparatus implements any method provided in the first aspect, the third aspect, or the fifth aspect. The communication apparatus may be implemented by hardware, or may be implemented by hardware executing corresponding software. The hardware or the software includes one or more units or modules corresponding to the foregoing function.

In a possible design, the communication apparatus includes a processor. The processor is configured to support the communication apparatus in performing a corresponding function of the terminal device in the foregoing method. The communication apparatus may further include a memory, and the memory may be coupled to the processor, and store program instructions and data that are necessary for the communication apparatus. Optionally, the communication apparatus further includes an interface circuit. The interface circuit is configured to support communication between the communication apparatus and a device such as a reader/writer.

For example, the communication apparatus has a function of implementing the method provided in the first aspect. The processor may be configured to: determine a second digest based on first system information received through a receive circuit; determine a first digest based on a first signature included in the first system information received through the receive circuit; and if the first digest matches the second digest, store or apply the first system information.

For another example, the communication apparatus has a function of implementing the method provided in the third aspect. The processor may be configured to: determine a first digest based on a first signature received through the interface circuit; determine a second digest based on first system information received through the interface circuit; and if the first digest received through the interface circuit matches the second digest, store or apply the first system information.

For still another example, the communication apparatus has a function of implementing the method provided in the fifth aspect. The processor may be configured to: determine, based on signature information received through the interface circuit, a first signature corresponding to first system information, where the first signature belongs to N signatures; determine a first digest based on the first signature; determine a second digest based on the first system information received through the interface circuit; and if the first digest matches the second digest, store or apply the first system information.

In a possible design, the communication apparatus includes corresponding functional modules, and the modules are respectively configured to implement the steps in the foregoing method. The function may be implemented by hardware, or may be implemented by hardware executing corresponding software. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to descriptions in the method provided in the first aspect or the fourth aspect. Details are not described herein.

For example, the communication apparatus has a function of implementing the method provided in the first aspect. The processing unit may be configured to: determine a second digest based on first system information received through the receive circuit; determine a first digest based on a first signature included in the first system information received through the receive circuit; and if the first digest matches the second digest, store or apply the first system information.

For another example, the communication apparatus has a function of implementing the method provided in the third aspect. The processing unit may be configured to: determine a first digest based on a first signature received through the communication unit; determine a second digest based on first system information received through the communication unit; and if the first digest received through the communication unit matches the second digest, store or apply the first system information.

For still another example, the communication apparatus has a function of implementing the method provided in the fifth aspect. The processing unit may be configured to: determine, based on signature information received through the communication unit, a first signature corresponding to first system information, where the first signature belongs to N signatures; determine a first digest based on the first signature; determine a second digest based on the first system information received through the communication unit; and if the first digest matches the second digest, store or apply the first system information.

According to an eighth aspect, this application further provides a communication apparatus. The communication apparatus implements any method provided in the second aspect, the fourth aspect, or the sixth aspect. The communication apparatus may be implemented by hardware, or may be implemented by hardware executing corresponding software. The hardware or the software includes one or more units or modules corresponding to the foregoing function.

In a possible design, the communication apparatus includes a processor. The processor is configured to support the communication apparatus in performing a corresponding function of the terminal device in the foregoing method. The communication apparatus may further include a memory, and the memory may be coupled to the processor, and store program instructions and data that are necessary for the communication apparatus. Optionally, the communication apparatus further includes an interface circuit. The interface circuit is configured to support communication between the communication apparatus and a device such as a reader/writer.

For example, the communication apparatus has a function of implementing the method provided in the second aspect. The processor may be configured to: generate first system information, where the first system information includes a first signature; and send the first system information to the terminal device through an interface circuit.

For another example, the communication apparatus has a function of implementing the method provided in the fourth aspect. The processor may be configured to: send first system information to the terminal device through the interface circuit; and send a first signature to the terminal device based on the first system information through the interface circuit.

For still another example, the communication apparatus has a function of implementing the method provided in the sixth aspect. The processor may be configured to send first system information to the terminal device through the interface circuit; and
send signature information to the terminal device through the interface circuit, where the signature information includes N signatures and indication information, the indication information indicates system information respectively corresponding to the N signatures, and N is an integer greater than 0.

In a possible design, the communication apparatus includes corresponding functional modules, and the modules are respectively configured to implement the steps in the foregoing method. The function may be implemented by hardware, or may be implemented by hardware executing corresponding software. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to descriptions in the method provided in the first aspect or the fourth aspect. Details are not described herein.

For example, the communication apparatus has a function of implementing the method provided in the second aspect. The processing unit may be configured to: generate first system information, where the first system information includes a first signature; and send the first system information to the terminal device through the communication unit.

For another example, the communication apparatus has a function of implementing the method provided in the fourth aspect. The processing unit may be configured to: send first system information to the terminal device through the communication unit; and send a first signature to the terminal device based on the first system information through the communication unit.

For still another example, the communication apparatus has a function of implementing the method provided in the sixth aspect. The processing unit may be configured to: send first system information to the terminal device through the communication unit; and
send signature information to the terminal device through the communication unit, where the signature information includes N signatures and indication information, the indication information indicates system information respectively corresponding to the N signatures, and N is an integer greater than 0.

According to a ninth aspect, a communication apparatus is provided. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method in the first aspect, the third aspect, or the fifth aspect and any possible design through a logic circuit or by executing code instructions.

According to a tenth aspect, a communication apparatus is provided. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method in the second aspect, the fourth aspect, or the sixth aspect and any possible design through a logic circuit or by executing code instructions.

According to an eleventh aspect, a computer-readable storage medium is provided. The computer-readable storage medium stores a computer program or instructions. When the computer program or the instructions is/are executed by a processor, the method in the first aspect to the sixth aspect and any possible design is implemented.

According to a twelfth aspect, a computer program product storing instructions is provided. When the instructions are run by a processor, the method in the first aspect to the sixth aspect and any possible design is implemented.

According to a thirteenth aspect, a chip system is provided. The chip system includes a processor, and may further include a memory, configured to implement the method in the first aspect to the sixth aspect and any possible design. The chip system may include a chip, or may include a chip and another discrete component.

According to a fourteenth aspect, a communication system is provided. The system includes the apparatus (for example, a terminal device) according to the first aspect and the apparatus (for example, a network device) according to the second aspect.

According to a fifteenth aspect, a communication system is provided. The system includes the apparatus (for example, a terminal device) according to the third aspect and the apparatus (for example, a network device) according to the fourth aspect.

According to a sixteenth aspect, a communication system is provided. The system includes the apparatus (for example, a terminal device) according to the fifth aspect and the apparatus (for example, a network device) according to the sixth aspect.

### BRIEF DESCRIPTION OF DRAWINGS

FIG. 1 is a schematic diagram of a network attack according to an embodiment of this application;
FIG. 2 is a schematic diagram of a system message that carries a signature according to an embodiment of this application;
FIG. 3 is a schematic diagram of an architecture of a network system according to an embodiment of this application;
FIG. 4 is a schematic flowchart of a communication method according to an embodiment of this application;
FIG. 5 is a schematic diagram of generating first system information according to an embodiment of this application;
FIG. 6 is a schematic diagram of generating first system information according to an embodiment of this application;
FIG. 7 is a schematic diagram of generating a second digest according to an embodiment of this application;
FIG. 8 is a schematic diagram of generating a second digest according to an embodiment of this application;
FIG. 9 is a schematic flowchart of a communication method according to an embodiment of this application;
FIG. 10 is a schematic flowchart of a communication method according to an embodiment of this application;
FIG. 11 is a schematic diagram of indication information according to an embodiment of this application;
FIG. 12 is a schematic diagram of a replay attack according to an embodiment of this application;
FIG. 13 is a schematic diagram of a structure of a communication apparatus according to an embodiment of this application; and
FIG. 14 is a schematic diagram of a structure of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.
(1) System information (system information, SI) and system information change notification (SI change notification)
   A terminal device may perform downlink synchronization with a cell through cell search, to obtain a physical cell identifier (physical cell identifier, PCI) of the cell. The terminal device needs to obtain the system information of the cell, access the cell based on a cell configuration, and work normally in the cell. The system information in new radio (new radio, NR) mainly includes: a master information block (master information block, MIB), a system information block (system information block, SIB), and a positioning system information block (positioning SIB, posSIB). In an NR standard protocol specification, 14 types of the SIB are defined: a system information block type 1 to a system information block type 14, which are a SIB 1, a SIB2, ..., and a SIB 14 for short.
   The SIB 1 includes SI scheduling information (SI-SchedulingInfo), and indicates scheduling information of another SIB (such as a SIB2, ..., or a SIB14), or the like. SIBs other than the SIB1 are also referred to as other system information (other system information, OSI).
(2) Digest (digest): A binary bit string of any length is mapped to a binary bit string with a fixed length, and the binary bit string with the fixed length is a digest. The digest may also be referred to as a digital digest, a hash digest, a digital fingerprint, a fingerprint, or the like. A digest of system information is a unique value with a fixed length. Different information is converted into different digests, and digests of same information need to be the same. This process is irreversible, that is, information content cannot be deduced by using the digest.
(3) The terminal device may be a device having a wireless transceiver function or a chip that can be disposed in any device, or may be referred to as user equipment (user equipment, UE), an access terminal, a subscriber unit, a subscriber station, a mobile station, a remote station, a remote terminal, a mobile device, a user terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in video surveillance, a wearable terminal device, or the like.

A network device may be an apparatus configured to implement a function of the network device. The network device may be a device that communicates with a wireless terminal device over an air interface in an access network through one or more cells. For example, the network device may be a next generation NodeB (next Generation NodeB, gNB) in an NR system, an evolved NodeB (evolved NodeB, eNB) in an LTE system, or the like. The network device may also be an apparatus that can support the network device in implementing a function of the network device, for example, a chip system. The apparatus may be installed in the network device.

In embodiments of this application, "at least one" means one or more, and "a plurality of" means two or more. The term "and/or" describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a-b, a-c, b-c, or a-b-c, where a, b, and c may be singular or plural.

In addition, unless otherwise stated on the contrary, ordinal terms such as "first" and "second" mentioned in embodiments of this application are used to distinguish between a plurality of objects, and are not intended to limit sizes, content, a sequence, a time sequence, priorities, importance degrees, or the like of the plurality of objects. For example, first information and second information are merely used to distinguish between different information, and do not indicate different content, priorities, importance degrees, or the like of the two types of information.

The foregoing describes some noun concepts used in embodiments of this application. The following describes technical features of embodiments of this application.

In wireless communication, communication security is a quite important factor, and relates to security assurance of user data. A fake base station attack is a common means that threatens wireless security. A fake base station is an unauthorized base station, and is usually composed of a simple wireless device and dedicated open-source software. The fake base station may simulate a target base station and send signaling to a target terminal according to a related protocol, to obtain related information of the target terminal.

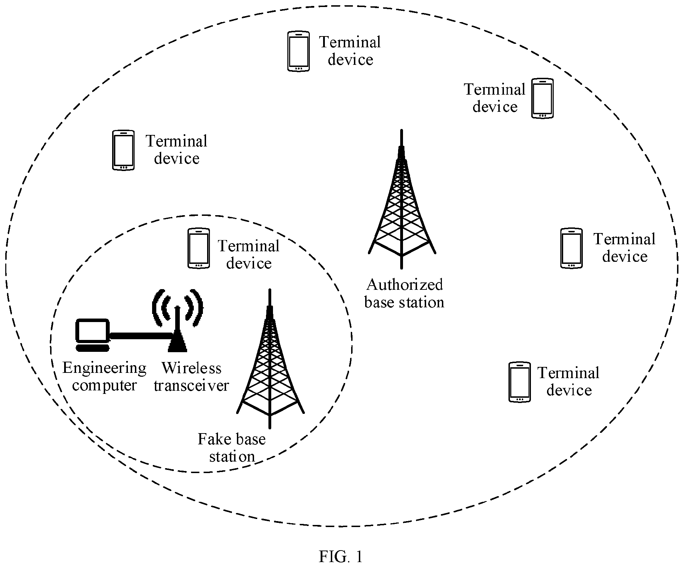

As shown in FIG. 1, a network attacker places the fake base station in coverage of the target base station, and the fake base station may force a nearby target terminal device of the fake base station to perform cell reselection, location update, and handover, to deceive the terminal device and provide incorrect information for the terminal device, to spread a virus, perform network fraud, and the like. In addition to the harm, the fake base station may intercept communication content between the base station and the terminal device, to intercept private data of a user. Finally, when the fake base station performs a deceptive attack on the terminal, normal communication between a network and the terminal is interfered, and network performance is affected. For example, when accessing the fake base station, the terminal device may use an incorrect system message provided by the fake base station. As a result, the terminal device cannot be paged by a network, and cannot access the network to work normally. For another example, the system message may be intercepted and illegally tampered with by the fake base station. Consequently, the terminal device uses an incorrect paging parameter, user access control (user access control, UAC) parameter, tracking area update (tracking area update, TAU) parameter, or the like, and cannot normally communicate with the base station, and finally a handover failure, an abnormal call drop, or the like is caused.

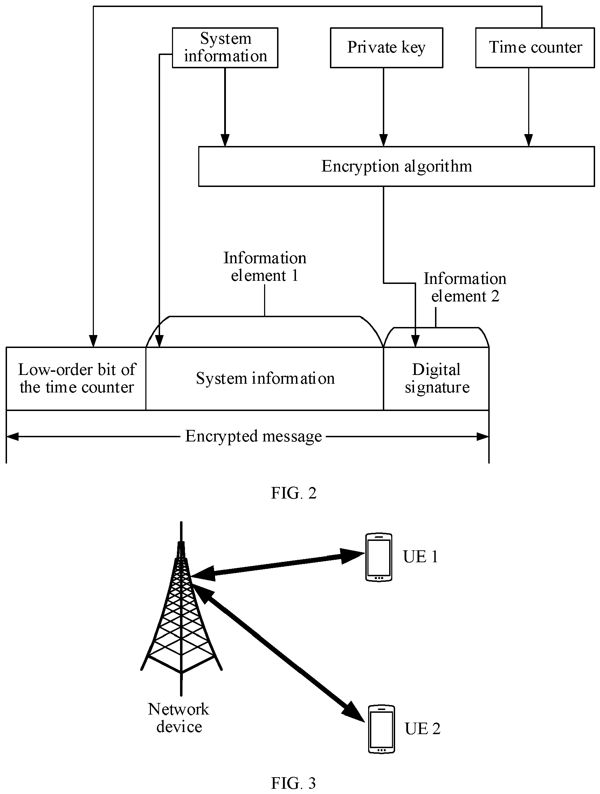

To defend against the fake base station and enhance network security, an authorized base station may use an asymmetric key to perform signature encryption on system information. Specifically, to enable the terminal device to verify the received system information, the base station signs a digital signature on the broadcast system information, the digital signature is used as an output of an encryption algorithm, and an input of the encryption algorithm includes system information content, a private key, and a time counter (time counter). The base station sends an encrypted message to the terminal device, one information element (assuming that the information element is an information element 1) in the encrypted message carries the system information, and another information element (assuming that the information element is an information element 2) carries the digital signature, as shown in FIG. 2. After receiving the encrypted message, the terminal device verifies, by using a public key provided by the network device, the digital signature carried in the information element 2. If the verification succeeds, the terminal device obtains the system information from the information element 1. However, for a terminal device that does not support signature encryption, after receiving an encrypted message, the terminal device cannot interpret the encrypted message, and consequently cannot obtain SIB content.

Based on this, embodiments of this application provide a communication method and apparatus, to improve communication security. The method and the apparatus are based on a same concept. Because the method and the apparatus have a similar problem-resolving principle, for implementations of the apparatus and the method, refer to each other. Repeated descriptions are not provided herein.

The communication method provided in this application may be applied to various communication systems, for example, internet of things (internet of things, IoT), narrow band internet of things (narrow band internet of things, NB-IoT), long term evolution (long term evolution, LTE), a 5th generation (5G) communication system, an LTE and 5G hybrid architecture, a 5G NR system, a 6G system, or a new communication system emerging in future communication development. The communication system in this application may alternatively be a machine to machine (machine to machine, M2M) network or another network, provided that the terminal device communicates with the network device in the network.

FIG. 3 shows a communication system according to an embodiment of this application. The communication system includes a network device and two terminal devices, namely, UE 1 and UE 2. In the communication system, the UE 1 and the UE 2 may send uplink data to the network device, and the network device may send downlink data to the UE 1 and the UE 2. Device types of the UE 1 and the UE 2 are not specifically limited herein. It should be understood that FIG. 3 is merely an example for description, and does not specifically limit quantities, types, and the like of network devices and terminal devices in the communication system.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

The following describes the technical solutions in embodiments of this application with reference to the accompanying drawings in embodiments of this application.

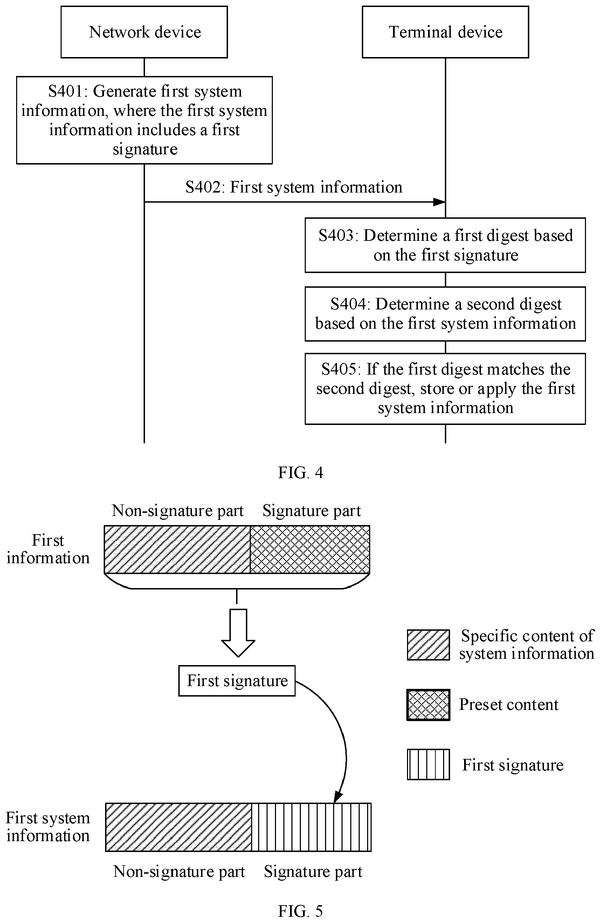

FIG. 4 is a schematic flowchart of a communication method according to this application. The method includes the following steps.

S401: A network device generates first system information.

The first system information includes a first signature. For example, an extension field in the first system information carries an information element of the signature. For example, the first system information is a SIB 1. An extension field (extension) of the SIB 1 may carry the information element of the signature. Therefore, each SIB 1 has a signature. After receiving the SIB 1, the terminal device may obtain the signature of the SIB 1 by parsing the SIB 1, and verify the SIB 1 based on the signature.

For example, the first system information is a SIB. In NR, content of the SIB 1 may include cell selection information, cell access related information, SI scheduling information, and the like, and the extension field is reserved. In this application, the first signature may be carried in the reserved field.

In an example for description, the first signature is used as a subfield in the extension field. For example, the content of the SIB 1 may be as follows:

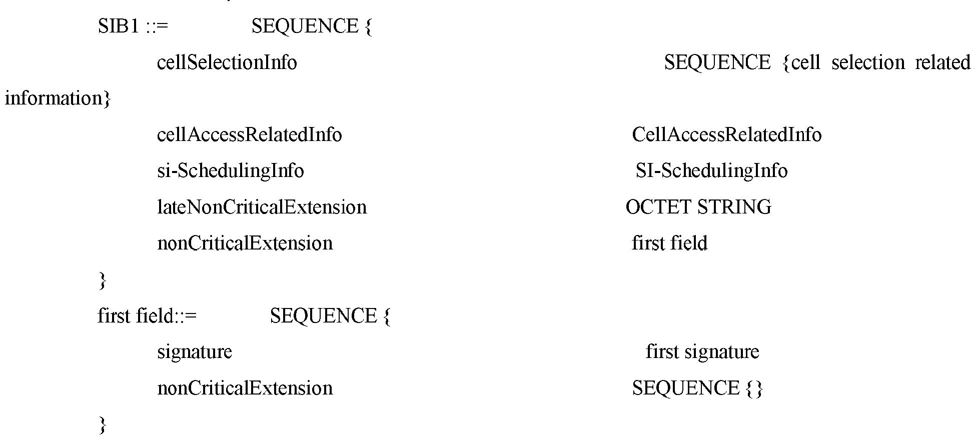

cellSelectionInfo is cell selection information, cellAccessRelatedInfo is cell access related information, and si-SchedulingInfo is SI scheduling information. The first field is a subfield of the extension field nonCriticalExtension, and is used to carry the first signature.

In another example for description, the first signature may be used as a subfield of extension information of any version carried in the extension field. For example, scheduling information for locating SI and the like may be introduced, and included in IE SIB 1-v1610-IEs as an extension field of the foregoing legacy SIB 1. More user access control (user access control, UAC) parameters are introduced subsequently, for example, uac-BarringInfo-v1630, and are included in SIB1-v1630-IEs as an extension field of IE SIB1-v1610-IEs. For example, the content of the SIB1 may be as follows:

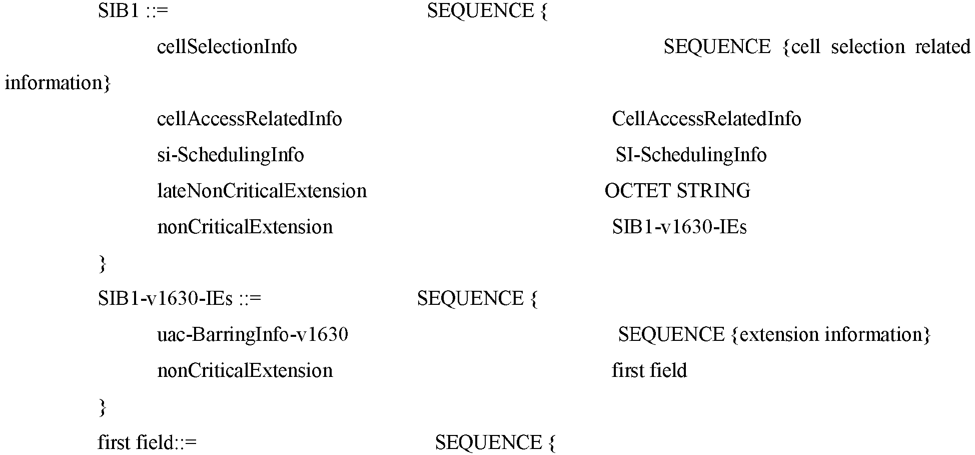

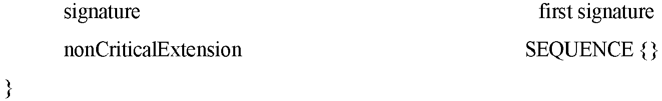

cellSelectionInfo is cell selection information, cellAccessRelatedInfo is cell access related information, si-SchedulingInfo is SI scheduling information, IE SIB 1-v1610-IEs is introduced extension information, SIB1-v1630-IEs is an introduced extension field, and the first field is a subfield of the extension field nonCriticalExtension of SIB1-v1630-IEs and is used to carry the first signature.

It should be understood that information included in the SIB 1 in the foregoing two examples is merely an example for description, and does not require that the SIB 1 needs to include the foregoing information. In addition, the SIB1 may further include other information that is not listed in the foregoing examples. This is not specifically limited herein.

The following describes two methods for generating the first system information by the network device.

The first method for generating the first system information is: generating the first signature based on first information, where a first field in the first information is preset content, and the first field may be a field used to carry the signature; and generating the first signature, and setting the first field in the first information to the first signature, to obtain the first system information.

For example, it is assumed that the first system information may include two parts: a signature part and a non-signature part. The signature part may be carried in the first field, and the non-signature part may be carried in another field. When generating the first system information, the network device may set the first field to the preset content, then generate the first signature based on the preset content and the non-signature part, and replace the first field by the preset content with the first signature to form the first system information with the non-signature part, as shown in FIG. 5.

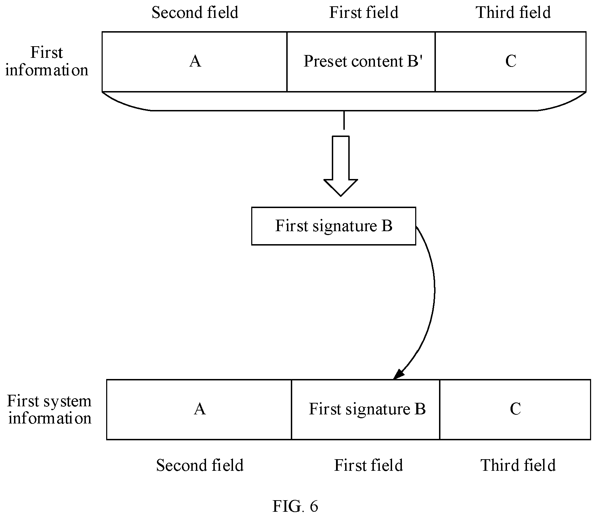

Optionally, the non-signature part may include a second field, and may further include a third field, the second field is used to carry specific content of the system information, for example, a parameter included in the system information, and the third field may be used to carry extension information emerging in future communication development. Forward compatibility may be ensured by using the third field. In a possible implementation, a sequence of the first field, the second field, and the third field may be the second field, the first field, and the third field. With reference to this implementation, a process in which the network device generates the first system information may be shown in FIG. 6.

Certainly, the sequence of the first field, the second field, and the third field may alternatively be another sequence. The sequence of the first field, the second field, and the third field is not specifically limited in this application.

For example, the preset content may be all 1s, that is, a value of each bit included in the first field is 1. For example, assuming that the first field includes seven bits, the preset content may be 1111111. For another example, the preset content may be all 0s, that is, a value of each bit included in the first field is 0. For example, assuming that the first field includes seven bits, the preset content may be 0000000. It may be understood that, herein is merely an example for description. The preset content may alternatively be another status value. For example, assuming that the first field includes seven bits, the preset content may be 1010101, 1111000, 1001111, or the like. The preset content is not specifically limited herein.

The second method for generating the first system information is: generating the first signature based on second information, where the first system information includes the second information and the first signature. In the method, the second information may be the foregoing non-signature part. This manner may be understood as that the preset content is null, that is, the first field is null.

It may be understood that, when generating the first signature, in addition to inputting the first information (or the second information), the network device may further input other information, for example, a private key and signature generation time.

S402: The network device sends the first system information to the terminal device. Correspondingly, the terminal device receives the first system information from the network device.

S403: The terminal device determines a first digest based on the first signature.

In an implementation, the terminal device may decrypt the first signature by using a public key, to obtain a digest of the first system information, namely, the first digest.

S404: The terminal device determines a second digest based on the first system information.

In correspondence to the first method for generating the first system information, the terminal device may set, to the preset content, the first field corresponding to the first signature in the first system information, to obtain the first information, and generate the second digest based on the first information. Specifically, the terminal device may determine the second digest based on the first information by using a hash function.

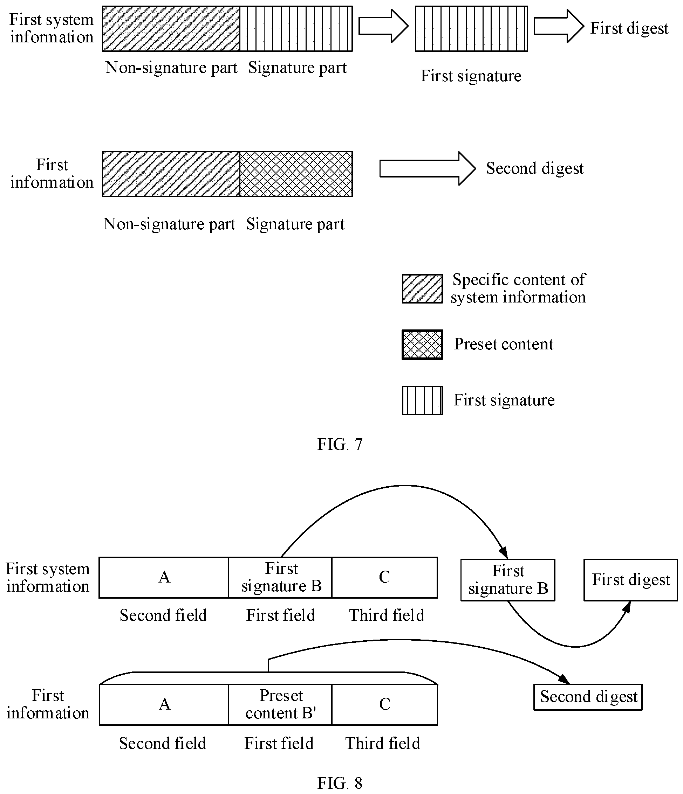

For example, it is assumed that the first system information may include two parts: a signature part and a non-signature part. The signature part may be carried in the first field, and the non-signature part may be carried in another field. When generating the second digest, the terminal device may replace the first field in the first system information with the preset content, and then generate the second digest based on the replaced first system information (namely, the first information), as shown in FIG. 7. For example, the non-signature part includes the second field and the third field. A process in which the terminal device generates the second digest may be shown in FIG. 8.

In correspondence to the second method for generating the first system information, the terminal device may determine the second digest based on the second information included in the first system information. In the method, the second information may be the foregoing non-signature part.

It may be understood that, when generating the second digest, in addition to inputting the first information (or the second information), the terminal device may further input other information, for example, a public key and signature generation time.

Optionally, in an implementation in which the terminal device generates the first digest based on a public key and the first signature, the terminal device may obtain the public key in the following manner: The network device may send the public key to the terminal device. In this manner, the private key may be reserved only by the network device, and the public key may be public information sent by the network device.

It should be noted that an execution sequence of S403 and S404 is not limited in this embodiment of this application.

S405: If the first digest matches the second digest, the terminal device stores or applies the first system information.

"The first digest matches the second digest" may mean "the first digest is the same as the second digest", or may mean that the first digest and the second digest meet another preset rule, or the like.

In an example for description, if the first digest matches the second digest, the terminal device may consider that the first system information is valid system information, or may consider that the network device sending the first system information is an authorized network. Therefore, the terminal device may store the first system information, for example, store a parameter included in the first system information, or may transfer a parameter included in the first system information to an upper layer, or use a parameter in the first system information.

In this embodiment of this application, the terminal device may obtain a signature from system information, so that the terminal device may verify the system information based on the signature carried in the system information. In this manner, communication security may be enhanced.

In addition, if the network device separately sends the system information and the signature by using two information elements in one message, a terminal device can decode the message only when the terminal device supports the signature. A terminal device that does not support the signature cannot complete decoding of the message, and consequently cannot obtain the system information. In comparison with this manner, in this embodiment of this application, the signature is carried in a field of the system information, so that both the terminal device that supports the signature and the terminal device that does not support the signature can complete decoding of the system information. Specifically, the terminal device that supports the signature may perform verification by using a signature obtained through decoding, and the terminal device that does not support the signature may skip the field that carries the signature, so that storage and use of other content of the system information by the terminal device are not affected. Therefore, backward compatibility may be ensured by using the method provided in this embodiment of this application.

In addition, the system information includes an extension field, so that the system information may carry information emerging in future communication development, and the terminal device that supports the information may decode the system information, and the terminal device that does not support the information may skip the extension field, to not affect storage and use of other content of the system information by the terminal device. Therefore, forward compatibility may be ensured by using this method.

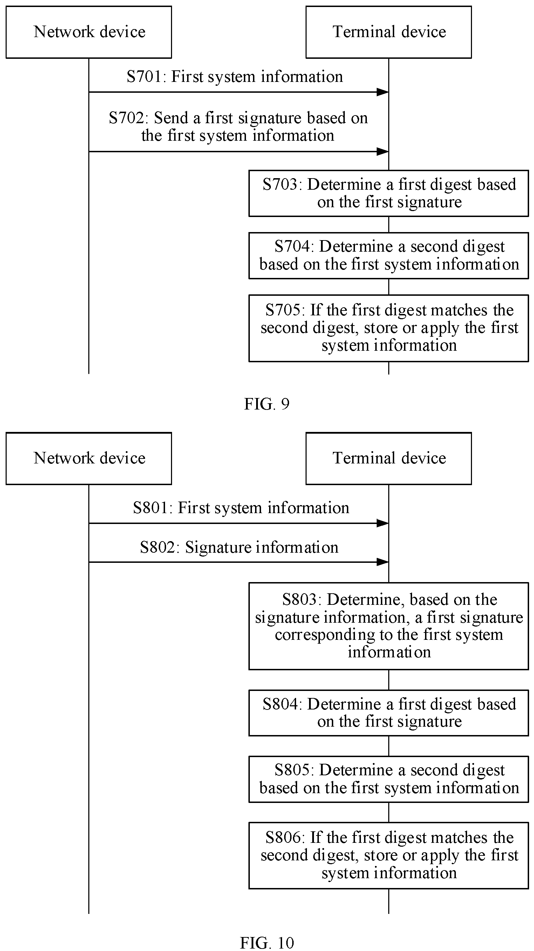

FIG. 9 is a schematic flowchart of a communication method according to this application. The method includes the following steps.

S701: A network device sends first system information to a terminal device. Correspondingly, the terminal device receives the first system information from the network device.

In an example for description, the first system information may include a field used to carry extension information emerging in future communication development, and forward compatibility may be ensured by using the field.

S702: The network device sends a first signature to the terminal device based on the first system information. Correspondingly, the terminal device receives the first signature based on the first system information.

In a possible implementation, a sending periodicity of the first system information is the same as a sending periodicity of the first signature. In this manner, the terminal device may accurately receive the signature corresponding to the first system information, so that verification accuracy of the first system information may be improved.

Optionally, when generating the first signature, the network device may use the first system information as an input of an encryption algorithm. In addition, the network device may further use information, for example, a private key and signature generation time, as the input of the encryption algorithm. This is not specifically limited herein.

The following describes a manner in which the network device sends the first system information and the first signature to the terminal device.

In an implementation, the network device may send the first signature to the terminal device based on a time-frequency resource corresponding to the first system information. Correspondingly, the terminal device may receive the first signature based on the time-frequency resource corresponding to the first system information.

Specifically, there may be a correspondence between a time-frequency resource corresponding to the first signature and the time-frequency resource corresponding to the first system information. Therefore, the network device (or the terminal device) may determine, based on the time-frequency resource corresponding to the first system information, the time-frequency resource corresponding to the first signature.

In an example for description, the correspondence between the time-frequency resource corresponding to the first signature and the time-frequency resource corresponding to the first system information may be as follows: A time domain resource corresponding to the first system information and a time domain resource corresponding to the first signature are separated by a first offset; and/or a frequency domain resource corresponding to the first system information and a frequency domain resource corresponding to the first signature are separated by a second offset.

For example, it is assumed that the correspondence between the time-frequency resource corresponding to the signature and the time-frequency resource corresponding to the system information is that the time domain resource corresponding to the system information and the time domain resource corresponding to the signature are separated by two symbols. Therefore, the network device may send system information 1 on a symbol 1, send a signature 1 corresponding to the system information 1 on a symbol 4, send system information 2 on a symbol 6, and send a signature 2 corresponding to the system information 2 on a symbol 9. Correspondingly, after receiving the system information 1 on the symbol 1, the terminal device may determine, based on the correspondence between the time-frequency resource corresponding to the signature and the time-frequency resource corresponding to the system information, that a time domain resource on which the signature 1 is located is the symbol 4, so that the signature 1 may be received on the symbol 4. After receiving the system information 2 on the symbol 6, the terminal device may determine, based on the correspondence between the time-frequency resource corresponding to the signature and the time-frequency resource corresponding to the system information, that a time domain resource on which the signature 2 is located is the symbol 9, so that the signature 2 may be received on the symbol 8.

In another implementation, the network device may alternatively indicate, by using the first system information, the time-frequency resource corresponding to the first signature. Correspondingly, the terminal device may receive the first signature on the time-frequency resource indicated by the first system information.

Optionally, in this embodiment of this application, a radio network temporary identifier (radio network temporary identifier, RNTI) corresponding to the first signature is different from an RNTI corresponding to the first system information.

Blind detection of a SIB 1 and OSI is performed by using a system information RNTI (system information RNTI, SI-RNTI). Therefore, for example, the SIB1 schedules the OSI. After obtaining the SIB 1, the terminal device obtains scheduling information of the OSI based on the SIB 1, and performs blind detection by using the SI-RNTI. If an RNTI used by signature information is the same as the RNTI used by the system information, a conflict occurs in receiving information, and the terminal device cannot know whether the signature or the OSI is finally obtained. In this embodiment of this application, different RNTIs are used, so that the terminal device may distinguish between the signature and the system information, and an information conflict may be avoided, thereby improving accuracy of the system information.

S703: The terminal device determines a first digest based on the first signature.

In an implementation, the terminal device may decrypt the first signature by using a public key, to obtain a digest of the first system information, namely, the first digest.

Optionally, when determining the first digest, in addition to using the first signature and the public key as an input, the terminal device may further use information, for example, signature generation time as the input. This is not specifically limited herein.

Optionally, in an implementation in which the terminal device generates the first digest based on the public key, the terminal device may obtain the public key in the following manner: The network device may send the public key to the terminal device. In this manner, a private key may be reserved only by the network device, and the public key may be public information sent by the network device.

S704: The terminal device determines a second digest based on the first system information.

Specifically, the terminal device may determine the second digest based on the first system information by using a hash function.

S705: If the first digest is the same as the second digest, the terminal device stores or applies the first system information.

"The first digest matches the second digest" may mean "the first digest is the same as the second digest", or may mean that the first digest and the second digest meet another preset rule, or the like.

In an example for description, if the first digest matches the second digest, the terminal device may consider that the first system information is valid system information, or may consider that the network device sending the first system information is an authorized network. Therefore, the terminal device may store the first system information, for example, store a parameter included in the first system information, or may transfer a parameter included in the first system information to an upper layer, or use a parameter in the first system information.

In this embodiment of this application, system information and a corresponding signature are separately sent, so that the terminal device that supports the signature may receive the signature based on a correspondence between a time-frequency resource corresponding to the signature and a time-frequency resource corresponding to the system information (or a time-frequency resource indicated by the system information), and perform verification based on the signature. In this manner, communication security may be enhanced. In addition, the terminal device that does not support the signature may not receive the signature, so that storage and use of the system information by the terminal device are not affected.

FIG. 10 is a schematic flowchart of a communication method according to this application. The method includes the following steps.

S801: A network device sends first system information to a terminal device. Correspondingly, the terminal device receives the first system information from the network device.

In an example for description, the first system information may be a SIB1, and may specifically be a SIB 1 before a parameter changes, or may be a SIB 1 after a parameter changes. For example, a difference between the SIB 1 before the parameter changes and the SIB 1 after the parameter changes may be one or more of the following:

A broadcasting status (si-BroadcastStatus) of system information in scheduling information (SI-SchedulingInfo) changes. For example, before the parameter changes, a broadcasting status of a SIBx is notbroadcasting, and changes to a broadcasting status after being requested by the terminal device.

A system information request resource (si-RequestResources) included in a system information request configuration (SI-RequestConfig) changes.

Due to emergence of messages, for example, an earthquake and tsunami warning system (earthquake and tsunami warning system, ETWS), scheduling information of a SIB6 to a SIB8 is added to SI-SchedulingInfo in the SIB 1.

It should be understood that the first system information is not limited to the SIB 1 in this embodiment of this application, and the first system information may alternatively be other system information, for example, a SIB2 or a SIB3.

In a possible implementation, after receiving the first system information, the terminal device may record receiving time of the first system information.

In an example for description, the first system information may include a field used to carry extension information emerging in future communication development, and forward compatibility may be ensured by using the field.

S802: The network device sends signature information to the terminal device. Correspondingly, the terminal device receives the signature information from the network device.

The signature information includes N signatures and indication information, the indication information indicates system information respectively corresponding to the N signatures, and N is an integer greater than 0. For example, there is at least one signature, in the N signatures, that corresponds to a plurality of pieces of system information. In the foregoing manner, if a plurality of pieces of system information correspond to same signature information, the system information may be sent once by using the signature information, so that signaling overheads may be reduced.

It may be understood that a function of the indication information is to correspond the N signatures included in the signature information to specific system information. The following describes the indication information with reference to specific examples.

Example 1: The indication information may indicate a low-order bit of a time counter of the system information corresponding to the N signatures.

Specifically, the low-order bit corresponding to the signature includes low-order bits of the time counter of all sending time of the system information corresponding to the signature. Alternatively, the low-order bit corresponding to the signature includes a low-order bit of the time counter of initial sending time of the system information corresponding to the signature. The following describes the indication information with reference to specific examples.

The SIB 1 is used as an example. For example, a sending periodicity of the SIB 1 is 160 ms, and a sending periodicity of the signature information is 800 ms. Assuming that the SIB 1 changes twice in one signature sending periodicity, there are versions A, B, and C, sending time corresponding to the version A, sending time corresponding to the version B, and sending time corresponding to the version C are respectively as follows: A SIB 1 of the version A is sent at a moment of 160 ms, a SIB 1 of the version B is sent at a moment of 320 ms, a SIB 1 of the version B is sent at a moment of 480 ms, a SIB1 of the version C is sent at a moment of 640 ms, and a SIB1 of the version C is sent at a moment of 800 ms.

For example, the signature information may include three signatures, namely, a signature 1, a signature 2, and a signature 3, which respectively correspond to low-order bit sets {60}, {20, 80}, and {40, 00} of the time counter. To be specific, the signature 1 corresponds to the low-order bit {60} of the sending time 160 ms of the SIB 1 of the version A, the signature 2 corresponds to the low-order bit {20, 80} of the sending time 320 ms and the sending time 480 ms of the SIB 1 of the version B, and the signature 3 corresponds to the low-order bit {40, 00} of the sending time 640 ms and the sending time 800 ms of the SIB 1 of the version C.

For another example, the signature information may include three signatures, namely, a signature 1, a signature 2, and a signature 3, which respectively correspond to low-order bit sets {60}, {20}, and {40} of the time counter. To be specific, the signature 1 corresponds to a low-order bit {60} of initial sending time 160 ms of the SIB 1 of the version A, the signature 2 corresponds to a low-order bit {20} of initial sending time 320 ms of the SIB 1 of the version B, and the signature 3 corresponds to a low-order bit {40} of initial sending time 640 ms of the SIB 1 of the version C.

For example, the signature 1, the signature 2, and the signature 3 respectively correspond to low-order bit sets {60}, {20, 80}, and {40, 00} of the time counter. If the terminal device receives the SIB 1 at a moment t1, the terminal device may determine a signature corresponding to the SIB 1 in the following manner: determining a low-order bit that is in the low-order bit sets corresponding to the signatures 1 to 3 and that is closest to a low-order bit at the moment t1; and determining that a signature corresponding to the closest low-order bit is the signature corresponding to the received SIB 1. For example, assuming that the low-order bit at the moment t1 is 62, and is closest to 60, it is determined that the corresponding signature is the signature 1.

For example, the signature 1, the signature 2, and the signature 3 respectively correspond to low-order bit sets {60}, {20}, and {40} of the time counter. If the terminal device receives the SIB1 at the moment t1, the terminal device may determine a signature corresponding to the SIB 1 in the following manner: The terminal device may determine a low-order bit of the time counter of the sending time of the SIB corresponding to each signature based on a sending periodicity of the SIB 1 and the low-order bit sets corresponding to the signatures 1 to 3; determine a low-order bit that is in the low-order bit of the time counter of the sending time of the SIB and that is closest to the low-order bit at the moment t1 is determined; and determine that a signature corresponding to the closest low-order bit is the signature corresponding to the received SIB 1. For example, according to the sending periodicity of the IB 1, it may be determined that the low-order bit sets of the time counter of the sending time of the SIB corresponding to the signatures 1 to 3 are {60}, {20, 80}, {40, 00}. Assuming that the low-order bit at the moment t1 is 62, and is closest to 60, it is determined that the corresponding signature is the signature 1. Assuming that the low-order bit at the moment t1 is 80, and is closest to 80, it is determined that the corresponding signature is the signature 2.

Example 2: The indication information may indicate a time unit in which sending time of the system information corresponding to the N signatures is located.

Example 2 is similar to Example 1, and a difference is that the signature in Example 1 corresponds to the low-order bit of the time counter of the sending time, while the signature in Example 2 corresponds to the time unit in which the sending time is located. Details are not repeatedly described herein again.

For example, the time unit may be a start frame/subframe or the like. In an example, the indication information may indicate a system frame number (system frame number, SFN) corresponding to the sending time of the system information corresponding to the N signatures.

Example 3: The indication information may indicate first time in a sending periodicity of the signature information, and indicates signatures respectively corresponding to time before the first time and time after the first time.

In an example, the indication information may be a bitmap, where a quantity of bits included in the bitmap may be a quantity of sending times of the system information in the sending periodicity of the signature information, and a status of a bit in the bitmap may indicate whether corresponding system information changes. Therefore, the terminal device may determine, based on the receiving time of the system information and the indication information, the signature corresponding to the system information. For example, the SIB1 is used as an example. It is assumed that five SIB1s may be sent in the sending periodicity of the signature information, and the indication information may be a 5-bit bitmap, where a bit value "1" may indicate that content of the SIB1 changes, and a bit value "0" may indicate that content of the SIB1 does not change. In this example, SIB 1s with different content may be considered as different SIB 1 versions. If content of the SIB 1 changes, it may be considered that a new version of the SIB1 is sent, and versions of the SIB 1 are in a one-to-one correspondence with signatures carried in the signature information.

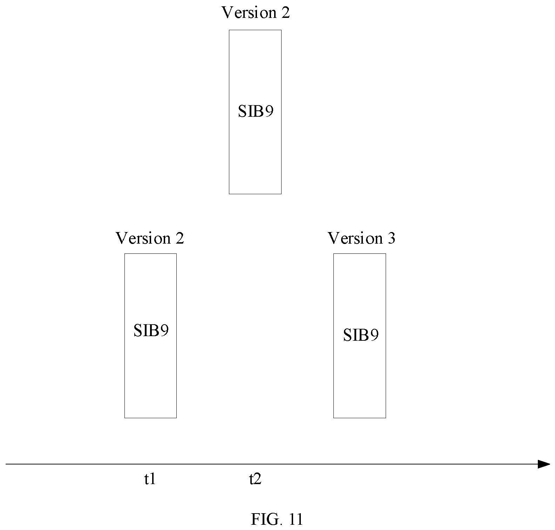

For example, the SIB1 is used as an example. It is assumed that five SIB1s may be sent in the sending periodicity of the signature information, and the signature information includes three signatures and indication information. The indication information is 11010, and indicates that content of the first SIB1 is a version 1, content of the second SIB changes to a version 2, content of the third SIB 1 does not change, and is still a version 2, content of the fourth SIB1 changes to a version 3, and content of the fifth SIB1 does not change, and is still a version 3. It may be seen that, SIB1s of three versions are sent in the sending periodicity of the signature information, and the three versions are in a one-to-one correspondence with three signatures carried in the signature information. For example, the version 1 corresponds to a signature 1, that is, the first SIB1 corresponds to the signature 1. The version 2 corresponds to the signature 2, that is, the second SIB1 and the third SIB1 correspond to the signature 2. The version 3 corresponds to the signature 3, that is, the fourth SIB1 and the fifth SIB 1 correspond to the signature 3, as shown in FIG. 11.

Based on the signature information, the terminal device may determine a specific SIB 1 based on the receiving time of the SIB 1, so that a corresponding signature may be determined. For example, it is determined, based on the receiving time of the SIB 1, that the SIB 1 is the third SIB 1, so that it may be determined that the corresponding signature is the signature 2.

Optionally, the signature information may be sent for a plurality of times. In this manner, it may be ensured that the terminal device may receive the signature information, so that network security may be ensured.

In a possible implementation, the signature included in the signature information may be a subset of all signatures. In this implementation, if the system information received by the terminal device does not have a corresponding signature in the signature information, the terminal device may re-receive the system information. In this manner, signaling overheads may be further reduced.

In an implementation, the signature information may be used as system information.

It should be noted that an execution sequence of steps S801 and S802 is not limited in this embodiment of this application.

Optionally, when generating the first signature, the network device may use the first system information as an input of an encryption algorithm. In addition, the network device may further use information, for example, a private key and signature generation time, as the input of the encryption algorithm. This is not specifically limited herein.

S803: The terminal device determines, based on the signature information, the first signature corresponding to the first system information, where the first signature belongs to the N signatures.

S804: The terminal device determines a first digest based on the first signature.

In an implementation, the terminal device may decrypt the first signature by using a public key, to obtain a digest of the first system information, namely, the first digest.

Optionally, when determining the first digest, in addition to using the first signature and the public key as an input, the terminal device may further use information, for example, signature generation time as the input of the encryption algorithm. This is not specifically limited herein.

Optionally, in an implementation in which the terminal device generates the first digest based on the public key, the terminal device may obtain the public key in the following manner: The network device may send the public key to the terminal device. In this manner, a private key may be reserved only by the network device, and the public key may be public information sent by the network device.

S805: The terminal device determines a second digest based on the first system information.

Specifically, the terminal device may determine the second digest based on the first system information by using a hash function.

It should be noted that S805 may be performed before S802, or may be performed after any one of S802 to S804, or S805 may be performed at the same time with any one of S802 to S804. This is not specifically limited herein.

S806: If the first digest is the same as the second digest, the terminal device stores or applies the first system information.

In a possible implementation, if the system information is a SIB9, the sending periodicity of the system information is the same as the sending periodicity of the signature information, or the system information and the signature information are carried in a same message.

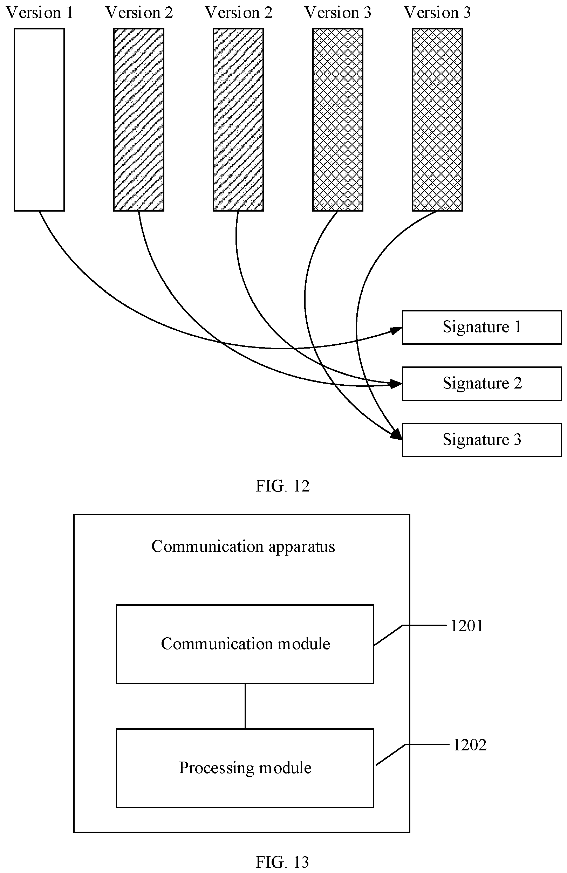

Because the SIB9 is used for time coordination, if the fake base station repeatedly sends the SIB9, the terminal device receives same SI9s at different time, and consequently the terminal device calculates incorrect reference time. For example, the terminal device receives a SIB9 of a version 2 at a moment t1, and receives, at a moment t2, a SIB9 of the version 2 sent by the fake base station. Because t2 is different from time t1 at which the network device actually sends the SIB9, the terminal device may calculate incorrect reference time, as shown in FIG. 12. In this embodiment of this application, the SIB9 and the signature information are sent in a same message, or a same sending periodicity is used, so that the terminal device may determine a correct SIB9, and accuracy of time adjustment may be improved.

In this embodiment of this application, the terminal device may obtain, based on the signature information, the signature corresponding to the system information, so that verification may be performed on the system information based on the signature. In this manner, communication security may be enhanced.

In addition, in this embodiment of this application, the system information is decoupled from the signature, so that a terminal device that does not support the signature may not receive the signature information, and a terminal device that supports the signature may determine, based on the signature information, the signature corresponding to the system information for verification, so that forward compatibility may be ensured. In addition, a plurality of signatures are sent in one message, so that same signatures are sent only once, thereby reducing signaling overheads.

Based on a same inventive concept as the method embodiments, an embodiment of this application provides a communication apparatus. A structure of the communication apparatus may be shown in FIG. 13. The communication apparatus includes a communication module 1201 and a processing module 1202.

In an implementation, the communication apparatus may be specifically configured to implement the method performed by the terminal device in the embodiment in FIG. 4. The apparatus may be the terminal device, or may be a chip or a chip set in the terminal device, or a part of a chip that is configured to perform a related method function. The communication module 1201 is configured to receive first system information from a network device, where the first system information includes a first signature. The processing module 1202 is configured to: determine a first digest based on the first signature; determine a second digest based on the first system information; and if the first digest matches the second digest, store or apply the first system information.

In an implementation, when determining the second digest based on the first system information, the processing module 1202 is specifically configured to: set a field corresponding to the first signature in the first system information to preset content, to obtain first information; and determine the second digest based on the first information.

In another implementation, when determining the second digest based on the first system information, the processing module 1202 is specifically configured to: when the first system information includes second information and the first signature, determine the second digest based on the second information.

In another implementation, the communication apparatus may be specifically configured to implement the method performed by the network device in the embodiment in FIG. 4. The apparatus may be the network device, or may be a chip or a chip set in the network device, or a part of a chip that is configured to perform a related method function. The processing module 1202 is configured to generate first system information, where the first system information includes the first signature. The communication module 1201 is configured to send the first system information to a terminal device.

In an implementation, the processing module 1202 is specifically configured to: generate the first signature based on first information, where a first field in the first information is preset content; and set the first field in the first information to the first signature, to obtain the first system information.

In another implementation, the processing module 1202 is specifically configured to generate the first signature based on second information, where the first system information includes the second information and the first signature.

In an implementation, the communication apparatus may be specifically configured to implement the method performed by the terminal device in the embodiment in FIG. 9. The apparatus may be the terminal device, or may be a chip or a chip set in the terminal device, or a part of a chip that is configured to perform a related method function. The communication module 1201 is configured to: receive first system information from a network device; and receive a first signature from the network device based on the first system information. The processing module 1202 is configured to: determine a first digest based on the first signature; determine a second digest based on the first system information; and if the first digest matches the second digest, store or apply the first system information.

Optionally, when receiving the first signature from the network device based on the first system information, the processing module 1202 is specifically configured to receive the first signature based on a time-frequency resource corresponding to the first system information.

Alternatively, when receiving the first signature from the network device based on the first system information, the processing module 1202 is specifically configured to: indicate, by using the first system information, a time-frequency resource used to carry the first signature, and receive the first signature on the time-frequency resource.

In another implementation, the communication apparatus may be specifically configured to implement the method performed by the network device in the embodiment in FIG. 9. The apparatus may be the network device, or may be a chip or a chip set in the network device, or a part of a chip that is configured to perform a related method function. The communication module 1201 is configured to communicate with a terminal device. The processing module 1202 is configured to: send first system information to the terminal device through the communication module 1201; and send a first signature to the terminal device based on the first system information through the communication module 1201.

Optionally, when sending the first signature to the terminal device based on the first system information through the communication module 1201, the processing module 1202 is specifically configured to send the first signature to the terminal device based on a time-frequency resource corresponding to the first system information through the communication module 1201.

Alternatively, when sending the first signature to the terminal device based on the first system information through the communication module 1201, the processing module 1202 is specifically configured to: indicate, by using the first system information, a time-frequency resource used to carry the first signature, and send the first signature to the terminal device on the time-frequency resource through the communication module 1201.

In an implementation, the communication apparatus may be specifically configured to implement the method performed by the terminal device in the embodiment in FIG. 10. The apparatus may be the terminal device, or may be a chip or a chip set in the terminal device, or a part of a chip that is configured to perform a related method function. The communication module 1201 is configured to: receive first system information from a network device; and receive signature information from the network device, where the signature information includes N signatures and indication information, the indication information indicates system information respectively corresponding to the N signatures, and N is an integer greater than 0. The processing module 1202 is configured to: determine, based on the signature information, a first signature corresponding to the first system information, where the first signature belongs to the N signatures; determine a first digest based on the first signature; determine a second digest based on the first system information; and if the first digest matches the second digest, store or apply the first system information.

In another implementation, the communication apparatus may be specifically configured to implement the method performed by the network device in the embodiment in FIG. 10. The apparatus may be the network device, or may be a chip or a chip set in the network device, or a part of a chip that is configured to perform a related method function. The communication module 1201 is configured to communicate with a terminal device. The processing module 1202 is configured to: send first system information to the terminal device through the communication module 1201; and send signature information to the terminal device through the communication module 1201, where the signature information includes N signatures and indication information, the indication information indicates system information respectively corresponding to the N signatures, and N is an integer greater than 0.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in embodiments of this application, further refer to related descriptions in the method embodiments.

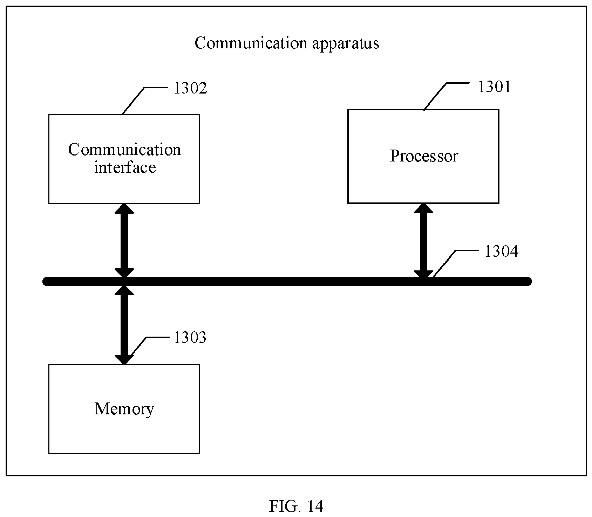

In a possible manner, the communication apparatus may be shown in FIG. 14, and the apparatus may be a label or a chip in the label. The apparatus includes a processor 1301 and a communication interface 1302, and may further include a memory 1303. The processing module 1202 may be a processor 1301. The communication module 1201 may be the communication interface 1302.

The processor 1301 may be a CPU, a digital processing unit, or the like. The communication interface 1302 may be a transceiver, an interface circuit such as a transceiver circuit, a transceiver chip, or the like. The apparatus further includes a memory 1303, configured to store a program executed by the processor 1301. The memory 1303 may be a nonvolatile memory such as a hard disk drive (hard disk drive, HDD) or a solid-state drive (solid-state drive, SSD), or may be a volatile memory (volatile memory) such as a random access memory (random access memory, RAM). The memory 1303 is any other medium that can be used to carry or store expected program code in a form of an instruction structure or a data structure and that can be accessed by a computer, but is not limited thereto.

The processor 1301 is configured to execute the program code stored in the memory 1303, and is specifically configured to perform the actions of the processing module 1202. Details are not described herein again in this application. The communication interface 1302 is specifically configured to perform the actions of the communication module 1201. Details are not described herein again in this application.

A specific connection medium between the communication interface 1302, the processor 1301, and the memory 1303 is not limited in this embodiment of this application. In this embodiment of this application, the memory 1303, the processor 1301, and the communication interface 1302 are connected through a bus 1304 in FIG. 14. In FIG. 14, the bus is represented by using a bold line. A manner of connection between other components is merely an example for description, and imposes no limitation. The bus may be classified into an address bus, a data bus, a control bus, and the like. For ease of representation, only one bold line is used to represent the bus in FIG. 14, but this does not mean that there is only one bus or only one type of bus.

An embodiment of this application further provides a computer-readable storage medium, configured to store computer software instructions that need to be executed by the foregoing processor, and the computer software instructions include a program that needs to be executed by the foregoing processor.

An embodiment of this application further provides a communication system. The communication system includes a communication apparatus configured to implement a function of the terminal device in the embodiment in FIG. 4 and a communication apparatus configured to implement a function of the network device in the embodiment in FIG. 4.

An embodiment of this application further provides a communication system. The communication system includes a communication apparatus configured to implement a function of the terminal device in the embodiment in FIG. 9 and a communication apparatus configured to implement a function of the network device in the embodiment in FIG. 9.

An embodiment of this application further provides a communication system. The communication system includes a communication apparatus configured to implement a function of the terminal device in the embodiment in FIG. 10 and a communication apparatus configured to implement a function of the network device in the embodiment in FIG. 10.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A communication method, wherein the method comprises:
receiving first system information from a network device, wherein the first system information comprises a first signature;
determining a first digest based on the first signature;
determining a second digest based on the first system information; and
if the first digest matches the second digest, storing or applying the first system information.

2. The method according to claim 1, wherein the determining a second digest based on the first system information comprises:
setting a field corresponding to the first signature in the first system information to preset content, to obtain first information; and
determining the second digest based on the first information.

3. The method according to claim 2, wherein
the preset content is that all bits comprised in the field are 0; or
the preset content is that all bits comprised in the field are 1.

4. The method according to claim 1, wherein the determining a second digest based on the first system information comprises:
when the first system information comprises second information and the first signature, determining the second digest based on the second information.

5. The method according to any one of claims 1 to 4, wherein the first signature is carried in an extension field in the first system information.

6. A communication method, wherein the method comprises:
generating first system information, wherein the first system information comprises a first signature; and
sending the first system information to a terminal device.

7. The method according to claim 6, wherein the generating first system information comprises:
generating the first signature based on first information, wherein a first field in the first information is preset content; and
setting the first field in the first information to the first signature, to obtain the first system information.

8. The method according to claim 7, wherein
the preset content is that all bits comprised in the first field are 0; or
the preset content is that all bits comprised in the first field are 1.

9. The method according to claim 6, wherein the generating first system information comprises:
generating the first signature based on second information, wherein the first system information comprises the second information and the first signature.

10. The method according to any one of claims 6 to 9, wherein the first signature is carried in an extension field in the first system information.

11. A communication method, wherein the method comprises:
receiving first system information from a network device;
receiving a first signature from the network device based on the first system information;
determining a first digest based on the first signature;
determining a second digest based on the first system information; and
if the first digest matches the second digest, storing or applying the first system information.

12. The method according to claim 11, wherein the receiving a first signature from the network device based on the first system information comprises:
receiving the first signature based on a time-frequency resource corresponding to the first system information.

13. The method according to claim 12, wherein there is a correspondence between the time-frequency resource corresponding to the first system information and a time-frequency resource corresponding to the first signature.

14. The method according to claim 13, wherein a time domain resource corresponding to the first system information and a time domain resource corresponding to the first signature are separated by a first offset; and/or
a frequency domain resource corresponding to the first system information and a frequency domain resource corresponding to the first signature are separated by a second offset.

15. The method according to claim 11, wherein the first system information indicates a time-frequency resource used to carry the first signature; and
the receiving a first signature from the network device based on the first system information comprises:
receiving the first signature on the time-frequency resource indicated by the first system information.

16. The method according to any one of claims 11 to 15, wherein a sending periodicity of the first system information is the same as a sending periodicity of the first signature.

17. The method according to any one of claims 11 to 16, wherein a radio network temporary identifier corresponding to the first signature is different from a radio network temporary identifier corresponding to the first system information.

18. A communication method, wherein the method comprises:
sending first system information to a terminal device; and
sending a first signature to the terminal device based on the first system information.

19. The method according to claim 18, wherein the sending a first signature to the terminal device based on the first system information comprises:
sending the first signature to the terminal device based on a time-frequency resource corresponding to the first system information.

20. The method according to claim 19, wherein there is a correspondence between the time-frequency resource corresponding to the first system information and a time-frequency resource corresponding to the first signature.

21. The method according to claim 20, wherein a time domain resource corresponding to the first system information and a time domain resource corresponding to the first signature are separated by a first offset; and/or
a frequency domain resource corresponding to the first system information and a frequency domain resource corresponding to the first signature are separated by a second offset.

22. The method according to claim 18, wherein the first system information indicates a time-frequency resource used to carry the first signature; and
the sending a first signature to the terminal device based on the first system information comprises:
sending the first signature to the terminal device on the time-frequency resource indicated by the first system information.

23. The method according to any one of claims 18 to 22, wherein a sending periodicity of the first system information is the same as a sending periodicity of the first signature.

24. The method according to any one of claims 18 to 23, wherein a radio network temporary identifier corresponding to the first signature is different from a radio network temporary identifier corresponding to the first system information.

25. A communication method, wherein the method comprises:
receiving first system information from a network device;
receiving signature information from the network device, wherein the signature information comprises N signatures and indication information, the indication information indicates system information respectively corresponding to the N signatures, and N is an integer greater than 0;
determining, based on the signature information, a first signature corresponding to the first system information, wherein the first signature belongs to the N signatures;
determining a first digest based on the first signature;
determining a second digest based on the first system information; and
if the first digest matches the second digest, storing or applying the first system information.

26. The method according to claim 25, wherein a second signature in the N signatures corresponds to a plurality of pieces of system information.

27. The method according to claim 25 or 26, wherein
the indication information indicates a low-order bit of a time counter of the system information corresponding to the N signatures;
the indication information indicates a time unit in which sending time of the system information corresponding to the N signatures is located; or
the indication information indicates first time in a sending periodicity of the signature information, and indicates signatures respectively corresponding to time before the first time and time after the first time.

28. The method according to any one of claims 25 to 27, wherein if the system information is a system information block SIB 9;
a sending periodicity of the system information is the same as the sending periodicity of the signature information; or
the system information and the signature information are carried in a same message.

29. A communication method, wherein the method comprises:
sending first system information to a terminal device; and
sending signature information to the terminal device, wherein the signature information comprises N signatures and indication information, the indication information indicates system information respectively corresponding to the N signatures, and N is an integer greater than 0.

30. The method according to claim 29, wherein
the indication information indicates a low-order bit of a time counter of the system information corresponding to the N signatures;
the indication information indicates a time unit in which sending time of the system information corresponding to the N signatures is located; or
the indication information indicates first time in a sending periodicity of the signature information, and indicates signatures respectively corresponding to time before the first time and time after the first time.

31. The method according to claim 29 or 30, wherein if the system information is a system information block SIB9;
a sending periodicity of the system information is the same as the sending periodicity of the signature information; or
the system information and the signature information are carried in a same message.

32. The method according to any one of claims 29 to 31, wherein a second signature in the N signatures corresponds to a plurality of pieces of system information.

33. A communication apparatus, wherein the apparatus comprises:
a communication module, configured to receive first system information from a network device, wherein the first system information comprises a first signature; and
a processing module, configured to: determine a first digest based on the first signature;
determine a second digest based on the first system information; and
if the first digest matches the second digest, store or apply the first system information.

34. The apparatus according to claim 33, wherein when determining the second digest based on the first system information, the processing module is specifically configured to:
set a field corresponding to the first signature in the first system information to preset content, to obtain first information; and
determine the second digest based on the first information.

35. The apparatus according to claim 34, wherein
the preset content is that all bits comprised in the field are 0; or
the preset content is that all bits comprised in the field are 1.

36. The apparatus according to claim 33, wherein when determining the second digest based on the first system information, the processing module is specifically configured to:
when the first system information comprises second information and the first signature, determine the second digest based on the second information.

37. The apparatus according to any one of claims 33 to 36, wherein the first signature is carried in an extension field in the first system information.

38. A communication apparatus, wherein the apparatus comprises:
a processing module, configured to generate first system information, wherein the first system information comprises a first signature; and
a communication module, configured to send the first system information to a terminal device.

39. The apparatus according to claim 38, wherein the processing module is specifically configured to:
generate the first signature based on first information, wherein a first field in the first information is preset content; and
set the first field in the first information to the first signature, to obtain the first system information.

40. The apparatus according to claim 39, wherein
the preset content is that all bits comprised in the first field are 0; or
the preset content is that all bits comprised in the first field are 1.

41. The apparatus according to claim 38, wherein the processing module is specifically configured to:
generate the first signature based on second information, wherein the first system information comprises the second information and the first signature.

42. The apparatus according to any one of claims 38 to 41, wherein the first signature is carried in an extension field in the first system information.

43. A communication apparatus, wherein the apparatus comprises:
a communication module, configured to: receive first system information from a network device; and
receive a first signature from the network device based on the first system information; and
a processing module, configured to: determine a first digest based on the first signature;
determine a second digest based on the first system information; and
if the first digest matches the second digest, store or apply the first system information.

44. The apparatus according to claim 43, wherein when receiving the first signature from the network device based on the first system information, the processing module is specifically configured to:
receive the first signature based on a time-frequency resource corresponding to the first system information.

45. The apparatus according to claim 44, wherein there is a correspondence between the time-frequency resource corresponding to the first system information and a time-frequency resource corresponding to the first signature.

46. The apparatus according to claim 45, wherein a time domain resource corresponding to the first system information and a time domain resource corresponding to the first signature are separated by a first offset; and/or
a frequency domain resource corresponding to the first system information and a frequency domain resource corresponding to the first signature are separated by a second offset.

47. The apparatus according to claim 43, wherein when receiving the first signature from the network device based on the first system information, the processing module is specifically configured to:
when the first system information indicates a time-frequency resource used to carry the first signature, receive the first signature on the time-frequency resource.

48. The apparatus according to any one of claims 43 to 47, wherein a sending periodicity of the first system information is the same as a sending periodicity of the first signature.

49. The apparatus according to any one of claims 43 to 48, wherein a radio network temporary identifier corresponding to the first signature is different from a radio network temporary identifier corresponding to the first system information.

50. A communication apparatus, wherein the apparatus comprises:
a communication module, configured to communicate with a terminal device; and
a processing module, configured to: send first system information to the terminal device through the communication module; and
send a first signature to the terminal device based on the first system information through the communication module.

51. The apparatus according to claim 50, wherein when sending the first signature to the terminal device based on the first system information through the communication module, the processing module is specifically configured to:
send the first signature to the terminal device based on a time-frequency resource corresponding to the first system information through the communication module.

52. The apparatus according to claim 51, wherein there is a correspondence between a time-frequency resource corresponding to the first signature and the time-frequency resource corresponding to the first system information.

53. The apparatus according to claim 52, wherein a time domain resource corresponding to the first system information and a time domain resource corresponding to the first signature are separated by a first offset; and/or
a frequency domain resource corresponding to the first system information and a frequency domain resource corresponding to the first signature are separated by a second offset.

54. The apparatus according to claim 50, wherein when sending the first signature to the terminal device based on the first system information through the communication module, the processing module is specifically configured to:
when the first system information indicates a time-frequency resource used to carry the first signature, send the first signature to the terminal device on the time-frequency resource through the communication module.

55. The apparatus according to any one of claims 50 to 54, wherein a sending periodicity of the first system information is the same as a sending periodicity of the first signature.

56. The apparatus according to any one of claims 50 to 55, wherein a radio network temporary identifier corresponding to the first signature is different from a radio network temporary identifier corresponding to the first system information.

57. A communication apparatus, wherein the apparatus comprises:
a communication module, configured to: receive first system information from a network device; and
receive signature information from the network device, wherein the signature information comprises N signatures and indication information, the indication information indicates system information respectively corresponding to the N signatures, and N is an integer greater than 0; and
a processing module, configured to determine, based on the signature information, a first signature corresponding to the first system information, wherein the first signature belongs to the N signatures;
determine a first digest based on the first signature;
determine a second digest based on the first system information; and
if the first digest matches the second digest, store or apply the first system information.

58. The apparatus according to claim 57, wherein
the indication information indicates a low-order bit of a time counter of the system information corresponding to the N signatures;
the indication information indicates a time unit in which sending time of the system information corresponding to the N signatures is located; or
the indication information indicates first time in a sending periodicity of the signature information, and indicates signatures respectively corresponding to time before the first time and time after the first time.

59. The apparatus according to claim 57 or 58, wherein if the system information is a system information block SIB9;
a sending periodicity of the system information is the same as the sending periodicity of the signature information; or
the system information and the signature information are carried in a same message.

60. The apparatus according to any one of claims 57 to 59, wherein a second signature in the N signatures corresponds to a plurality of pieces of system information.

61. A communication apparatus, wherein the apparatus comprises:
a communication module, configured to communicate with a terminal device; and
a processing module, configured to: send first system information to the terminal device through the communication module; and
send signature information to the terminal device through the communication module, wherein the signature information comprises N signatures and indication information, the indication information indicates system information respectively corresponding to the N signatures, and N is an integer greater than 0.

62. The apparatus according to claim 61, wherein
the indication information indicates a low-order bit of a time counter of the system information corresponding to the N signatures;
the indication information indicates a time unit in which sending time of the system information corresponding to the N signatures is located; or
the indication information indicates first time in a sending periodicity of the signature information, and indicates signatures respectively corresponding to time before the first time and time after the first time.

63. The apparatus according to claim 61 or 62, wherein if the system information is a system information block SIB9;
a sending periodicity of the system information is the same as the sending periodicity of the signature information; or
the system information and the signature information are carried in a same message.

64. The apparatus according to any one of claims 61 to 63, wherein a second signature in the N signatures corresponds to a plurality of pieces of system information.

65. A computer-readable storage medium, wherein the computer-readable storage medium is configured to store computer instructions; and when the computer instructions are run on a computer, the computer is enabled to perform the method according to any one of claims 1 to 5, or the computer is enabled to perform the method according to any one of claims 6 to 10, or the computer is enabled to perform the method according to any one of claims 11 to 17, or the computer is enabled to perform the method according to any one of claims 18 to 24, or the computer is enabled to perform the method according to any one of claims 25 to 28, or the computer is enabled to perform the method according to any one of claims 29 to 32.

66. A computer program product, wherein the computer program product comprises instructions; and when the instructions are run by a processor, the method according to any one of claims 1 to 5 is implemented, or the method according to any one of claims 6 to 10 is implemented, or the method according to any one of claims 11 to 17 is implemented, or the method according to any one of claims 18 to 24 is implemented, or the method according to any one of claims 25 to 28 is implemented, or the method according to any one of claims 29 to 32 is implemented.
